Europäisches Patentamt

European Patent Office

Office européen des brevets

(19)

(11) Publication number: **0 173 099**
**B1**

# (12) EUROPEAN PATENT SPECIFICATION

(45) Date of publication of patent specification: **15.11.89**

(51) Int. Cl.⁴: **H 04 N 1/393,** H 04 N 1/23

(21) Application number: **85109606.5**

(22) Date of filing: **31.07.85**

(54) A method for controlling magnification variation.

(30) Priority: **29.08.84 JP 178286/84**

(43) Date of publication of application:
**05.03.86 Bulletin 86/10**

(45) Publication of the grant of the patent:
**15.11.89 Bulletin 89/46**

(84) Designated Contracting States:
**DE FR GB IT**

(56) References cited:
**DE-A-3 342 129**
**GB-A-1 095 452**
**GB-A-2 134 350**
**US-A-4 423 439**

(73) Proprietor: **Dainippon Screen Mfg. Co., Ltd.**
**1-1, Tenjinkitamachi Teranouchi-Agaru 4-chome**
**Horikawa-Dori**
**Kamikyo-ku Kyoto 602 (JP)**

(72) Inventor: **Mitsuka, Ikuo**
**166-12, Hirai-cho**
**Kusatsu-shi Shiga-ken (JP)**
Inventor: **Kuwabara, Akira**
**110-1, Hirai-cho**
**Kusatsu-shi Shiga-ken (JP)**

(74) Representative: **Wilhelms, Rolf E., Dr. et al**
**WILHELMS, KILIAN & PARTNER Patentanwälte**
**Eduard-Schmid-Strasse 2**
**D-8000 München 90 (DE)**

Courier Press, Leamington Spa, England.

**Description**

Background of the invention

The present invention relates to a method for controlling magnification variation widely and minutely for use in a picture image inputting apparatus in which one dimensional array sensors such as CCD etc. are used.

Prior art

Conventionally, in a picture image inputting apparatus in which a one-dimensional array sensor such as CCD etc. is used, photographing magnification is fixed, and it has been general to obtain an output picture image size or a reproduced picture image size having a constant magnification. However, for example, as disclosed in the Japanese Patent Laid-Open Publication No. 58-139139, a method is known in which a one-dimensional array sensor is mechanically moved in the sub-scanning direction inside a camera, picture image signals are read out, and variation in photographing magnification is to be carried out only by optical means. An apparatus for practicing the method is compact.

However, in the method disclosed in the above described Japanese Patent Laid-Open Publication No. 58-139139 there are necessities for sufficiently correcting two-dimensional distortions of the optical system (lens, illumination etc.) and inexactnesses in diameter not only in the main scanning direction, but also in the sub-scanning direction. For this reason, in some usages which require high-quality picture image processings, for example, in the technical fields of printing, plate-making etc., and for minimizing deterioration of quality of reproduced pictures, a method which can suppress the two-dimensional distortions in one direction, that is, a method for performing sub-scanning by moving the original picture or the CCD camera etc. is desirable. However, in a case where an exact trimming of the original picture is required and a wide and minute variable magnification range is required, the sub-scanning mechanism must be precise and, as will be described hereinafter, controllable over a wide range of speed, i.e. from a low speed to a high speed. Especially, it has been difficult to realize a mechanism which can move the sub-scanning mechanism with high speed.

A method according to the preamble of claim 1 is known from US—A—4 423 439. According to this known method which is carried out in a facsimile transmitter the picture image projected on the light receiving surface of the line sensor is moved across the same in a direction perpendicular to the direction in which the line sensor extends in steps the width of which depends on the optical magnification of the original provided by the used one of two interchangeable lenses.

Summary of the invention

It is an object of the present invention to provide a method for obtaining a widened magnification range and having a desired picture quality.

This object is accomplished by the method as claimed in claim 1.

The present invention mainly relates to a method of determining the magnification in the sub-scanning direction because the optical magnification is connected to the arranging direction of the CCD one-dimensional sensor array. Accordingly, the decision of magnification in the sub-scanning direction is mainly based on steps described in the following three items, that is:

(1) varying magnification by changing the speed in the sub-scanning direction and the electric charge storage time in CCD;

(2) in case the sub-scanning speed cannot be changed or there is provided only a step-wise speed variable mechanism, varying magnification mainly by changing the electric charge storage time in CCD; and

(3) in case the electric charge storage time cannot be changed for example, because of them being out of variable range of the electric charge storage time or because of the circuit being a step-wise variable circuit), varying magnification by changing mainly sub-scanning speed. Thus, a magnification minutely variable over a wide range can be obtained.

Brief description of the drawings

Fig. 1 is a lock diagram of an original picture reproducing system to which the method of the present invention is applied;

Fig. 2 is a flow chart for obtaining each of parameters for setting up magnification in the original picture scanning apparatus shown in Fig. 1; and

Fig. 3 is a view showing background of the present invention.

Background of the invention

In Figs. 3a and 3b there are shown illustrative views of a photographic imaging means of a picture image reproducing system to which the method of the present invention is applied.

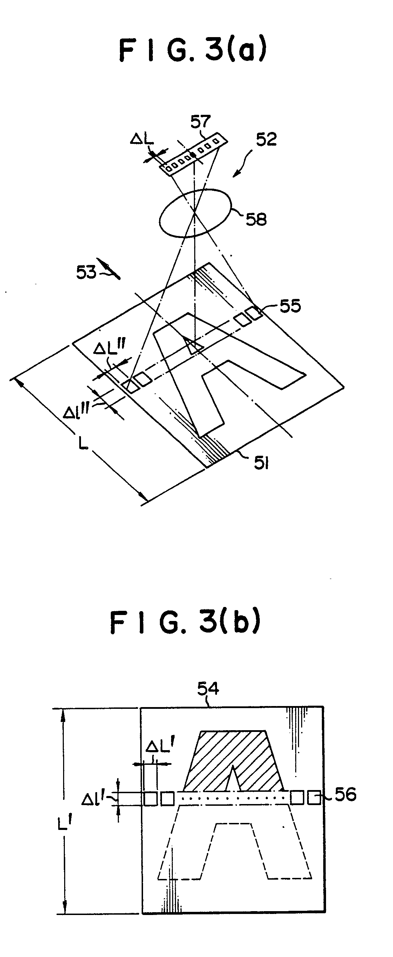

In the photographic means shown in Fig. 3a, an original picture 51 or a camera part 52 is moved in the sub-scanning direction 53 for scanning, while scanning in the main scanning direction is simultaneously conducted by the CCD elements of the camera part 52. From the picture signals obtained by the above

EP 0 173 099 B1

scanning operation, with a recording means separately provided, a reproduction picture 54 is obtained. A method for varying magnification in this case is described hereinafter.

At first, it is determined with what extent of minuteness $\Delta l''$ a picture element 55 to be read out from the original picture 51 should be separated and with what extent of minuteness $\Delta l'$ a recording picture element 56 should be reproduced. Then, the size of the desired reproduced picture compared to the original picture is set as that shown in Fig. 3b. In this case, if the length of one side of the original is L and the length of the corresponding side of the reproduced picture is set to be L', L/L' (length of original picture/length of reproduced picture) becomes the inverse ratio of the magnification M, that is,

$$L/L' = 1/M. \tag{1}$$

Sub-scanning is carried out by relative movement between the original picture and the camera part, and the movement is substantially continued at a speed set to V.

Basing upon the above described conditions, if reading out of the original picture is conducted with a width of $\Delta l''$ and a time $\tau$ (electric charge storage time in CCD), the sub-scanning speed V can be represented as

$$V = \Delta l''/\tau. \tag{2}$$

Further, since

$$L/L' = \Delta l''/\Delta l' \tag{3}$$

$\Delta l'' = L/L' \times \Delta l'$, accordingly,

$$V = L/L' \cdot \Delta l'/\tau \tag{4}$$

$$1/M = V \cdot \tau/\Delta l'. \tag{5}$$

Therefore, when the length of the side $\Delta l'$ of the recording picture element 56, which determines the resolving power in the sub-scanning direction is fixed, the following relation, $M \alpha 1/V\tau$ is generated. That is, the magnification M is inversely proportional to the product of the moving speed of the original picture V and electric charge storage time $\tau$.

Basing on the above described prepositions, a description will be given regarding further concrete examples.

In the case of using a stepping motor and a feeding screw for sub-scanning the original picture 51 shown in Fig. 3, if positioning at the original picture side for trimming is expected to be performed with an exactness of an extent of about 10 μm, the stepping motor and the feeding screw are set up so that with one step of the stepping motor the feeding screw may be moved by 5 μm, and the highest driving frequency is set to be $10^4 s^{-1}$ or kilopulses per second (kpps).

On the other hand the CCD is used as a one-dimensional array sensor and its electric charge storage time (main scanning time) is set up, for example, to $\tau = 1$ ms. In addition, the length of the side $\Delta l'$ in the sub-scanning direction of the recording picture element 56 of the reproduced picture is set to $\Delta l' = 50$ μm. Then, from the afore-mentioned conditions the minimum value of magnification M (i.e., to what extent L' can be reduced comparing with L) can be obtained from the formula (5), that is,

$$1/M_{MIN} = (L/L')_{MAX} = \frac{10 \times 10^3 \times 5 \times 10^{-6} \times 1 \times 10^{-3}}{50 \times 10^{-6}} = 1$$

In addition, it is needless to say regarding magnification variation range, that also the driving frequency of the stepping motor is digitally set up.

For example, by a designation value of some 8 bits, magnification can be varied only in 256 steps, which results in an impossibility of a minute setting-up of magnification.

In the sub-scanning mechanism there is a restriction regarding the variation range of magnification, as mentioned above, and if variable magnification control is carried out only by changing the sub-scanning speed, the variation range becomes narrower and usages thereof are limited to small fields.

On the other hand, variable range of the electric charge storage time $\tau$ of CCD is between 0.1 ms and several tens ms.

The method according to the present invention is characterized by varying photographic magnification by combining the sub-scanning speed V with the electric charge storage time (main scanning time $= \tau$) of CCD and controlling them complementarily, not merely by controlling the sub-scanning speed V. For example, in the afore-mentioned case, to obtain (L/L') = 5 (a reproduced picture of reduced scale 1/5), from the formula (5) the following condition, $\tau = 5$ ms, is sufficient.

Further, in order to set up magnification in the main scanning direction an optical magnification $\beta$ basing on a lens 58 and other methods (for example, increasing, trimming etc. which will be described hereinafter) is used at the same time. However, when there is a necessity of determining the degree of

3

minuteness ($\Delta$I") with which the original picture to be read out should be analyzed, there are relationships as described by the following formulas, that is,

$$\beta = \Delta L''/\Delta L, \quad L/L' = \Delta L''/\Delta L' = \Delta I''/\Delta I';$$

here, an arrangement pitch between each of light receiving cells of the one dimensional array sensor is $\Delta L$, and the pitches of picture elements of both the original picture and the reproduced picture in the main scanning direction are $\Delta L''$ and $\Delta L'$, respectively.

Description of the preferred embodiment

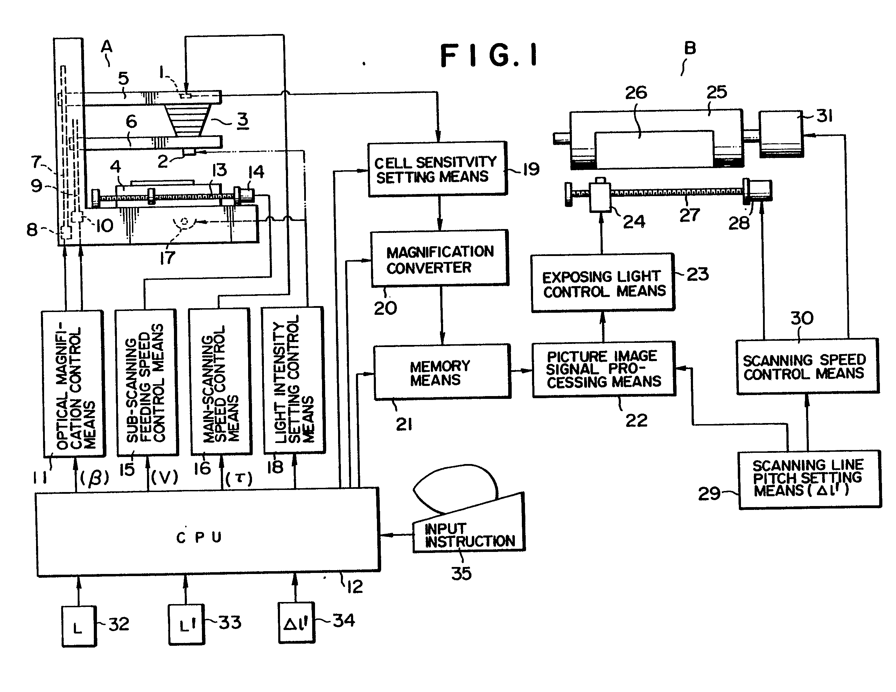

Fig. 1 is a block diagram showing an embodiment of a picture image reproducing system to which the method of the present invention is applied, and this system comprises an original picture scanning means A controlled by the method of the present invention and a picture scanning recording means B which uses a picture image recording part such as the conventional color scanner or the like.

The original picture scanning means A comprises an electronic camera 3 for main scanning having a one-dimensional array sensor 1 (for example, CCD) and a lens 2, a table 4 for feeding the original picture perpendicular to the direction in which the cells of the sensor 1 are arranged, i.e., the sub-scanning direction which intersects the main scanning direction at right angles.

In order to be able to freely vary the optical magnification $\beta$ in the direction in which the cells are arranged, the electronic camera 3 is adapted for a free set-up of the distance between a camera frame 5 on which the sensor 1 is provided and the upper surface of the table 4, and of the distance between a lens frame 6 on which the lens 2 is mounted and the upper surface of the table 4. The camera frame 5 is driven and controlled according to a desired optical magnification $\beta$ given by a CPU 12 and using an optical magnification controlling menas 11 which applies an automatic focusing optical magnification setting method to a feeding screw 7 and a motor 8. In the same manner as described above, also the lens frame 6 is driven and controlled through a feeding screw 9 and a motor 10. (For example, refer to the Japanese Patent Publication No. 57-13859).

The feeding table 4 is driven and controlled through a feeding screw 13 and a motor 14 according to a desired value for the feeding speed V given by the CPU through a sub-scanning feeding speed control means 15. In the sensor 1, through a main scanning speed control means 16, according to a value of desired main scanning time $\tau$ given from the CPU (12), the time for one main scanning line, that is, the electric charge storage time $\tau$ is controlled.

On the optical axis of the lens 2 at the underside of the feeding table 4 there is provided a light source 17 for illuminating the original picture, and the quantity of light of the light source 17 is set up, by a light quantity setting means 18, according to the optical magnification $\beta$ given to the CPU 12 and the scanning time $\tau$ of the sensor 1 prior to the scanning of the original picture. In addition, the light quantity setting means 18 may control the value of the diaphragm of the lens 2 according to the optical magnification $\beta$ and the scanning time $\tau$, and it may also control the light quantity of a desired part by associating a light quantity of the light source 17 with a value of diaphragm of the lens 2. At any rate it is desired that the standard of lightness of a light image produced on the surface of the sensor 1 may be substantially constant.

Picture image signals output from the sensor 1 are input to a cell sensitivity setting means 19, and the cell sensitivity setting means 19 is adjusted previously as follows. For example, prior to scanning the original picture, a white level corresponding to the highlight setup point is received by all the cells, and then the cell sensitivity setting means 19 adjusts a sensitivity correcting value so that the output of said white level at every cell may be constant. (For example, refer to the Japanese Patent Application No. 59-35336). The invention disclosed in the application can correct optical two-dimensional distortion etc. Further, when the cell sensitivity setting means 19 is being set up, main scanning operation of the sensor 1 is controlled with the electric charge storage time $\tau$ which is equal to the main scanning time $\tau$ decided according to a magnification as will be described hereinafter.

The picture signal output from the cell sensitivity setting means 19 is input to an electronic magnification converter 20 and this electronic magnification converter 20 increases normal picture element signals obtained by the sensor 1 by doubling the same picture element with a desired interval or trims normal picture element signals with a desired interval. Thus, by modifying the number of picture elements of a reproduced picture to that of the normal picture elements of the original picture, enlargement and/or reduction of the reproduced picture is achieved electronically. (For example, refer to Japanese Patent Laid-Open Publication No. 53-11601, Japanese Patent Laid-Open Publication No. 54-35613 and Japanese Patent Laid-Open Publication No. 54-65601).

In addition, the electronic magnification converter 20 can increase and/or trim the number of picture elements both in the main scanning and the sub-scanning directions. In those cases, setup conditions established prior to scanning the original picture, such as the limit of the amount of increasing or trimming, and determining which scanning directions should be taken etc. are input to the CPU 12, and are set up to be standards for decision.

Magnification variation in the main scanning direction is mainly carried out by the optical magnification control means 11, and magnification variation exceeding the range of control is performed, as afore-mentioned, by increasing or trimming the picture elements.

The picture signals processed by the magnification converter 20 are applied to a picture signal memory means 21 to store once the whole original picture elements information therein, and then they are appropriately read out and fed to a picture recording apparatus B. In addition, for processing the information in real time, the original picture elements information is fed to the memory means 21 which has memory capacity capable of storing original picture elements information of a quantity per at least one main scanning (pulses necessary for synchronization from the CPU are fed to the pulse motor 14 through the sub-scanning feeding speed control means 15, are fed to the CCD 1 through the main scanning speed control means 16, and are then fed to the cell sensitivity setting means 19, to the magnification converter 20 and the memory means 21) and stored therein the quantity at every one main scanning, and is read out of by a timing pulse from the picture recording apparatus B.

The picture recording apparatus B is, as described the above, an apparatus like a color scanner etc. from which a picture image inputting means is eliminated, and the picture image signals output from the recording means 21 are subjected to color correction, gradation correction and other necessary picture signal operation processing in a picture image signal processing means 22. The picture image signals processed in the picture image signal processing means 22 are fed to a recording head 24 through an exposure light control means (23) to reproduce a reproduced picture on a photosensitive material 26 mounted on a rotational drum 25. The recording head 24 is driven by a sub-scanning feeding screw 27 and a motor 28 so that a desired scanning pitch $\Delta l'$ may be obtained.

The scanning pitch $\Delta l'$ corresponds to the size of the picture element of the reproduced picture, and the size is determined according to the desired quality of the reproduced picture. And if the size thereof is within the range in which a sufficiently satisfiable quality of the reproduced picture is obtained, size is regarded as one of the magnification setting factors and varied appropriately and set up in a scanning pitch setting means 29.

Values $\Delta l'$, $\Delta L'$ of the scanning pitches (pitch in the sub-scanning direction and pitch in the main scanning direction) correspond to, as mentioned above, sizes of the picture elements to be recorded, and in the range within which no effect is given to the quality of the picture, size of the reproduced picture can be utilized as a parameter of magnification variation. However, usually, preferable values are given as initial values to respective parameters $\beta$, $V$ and $\tau$ etc. which determine the magnification (will be described hereinafter).

In the original picture scanning apparatus A shown in Fg. 1, a rotary encoder etc. (not shown) is mounted coaxially with the motor 14, and a scanning position in the sub-scanning direction can so be discriminated (the scanning position in the main scanning direction is discriminated by reading pulses from the CCD 1). On the other hand, in the picture recording apparatus B, a rotary encoder, etc. (not shown) is mounted coaxially with the motor 28 and motor 31 to discriminate each of the scanning positions in the sub-scanning direction and the main scanning direction.

For setting up the magnification $\beta$, a rotary encoder (not shown) is mounted coaxially with the motors 8 and 10 (refer to, for example, the Japanese Patent Publication No. 57-13859). These facts are well known matters and they are not objects of the present invention, so that no further description is given thereto.

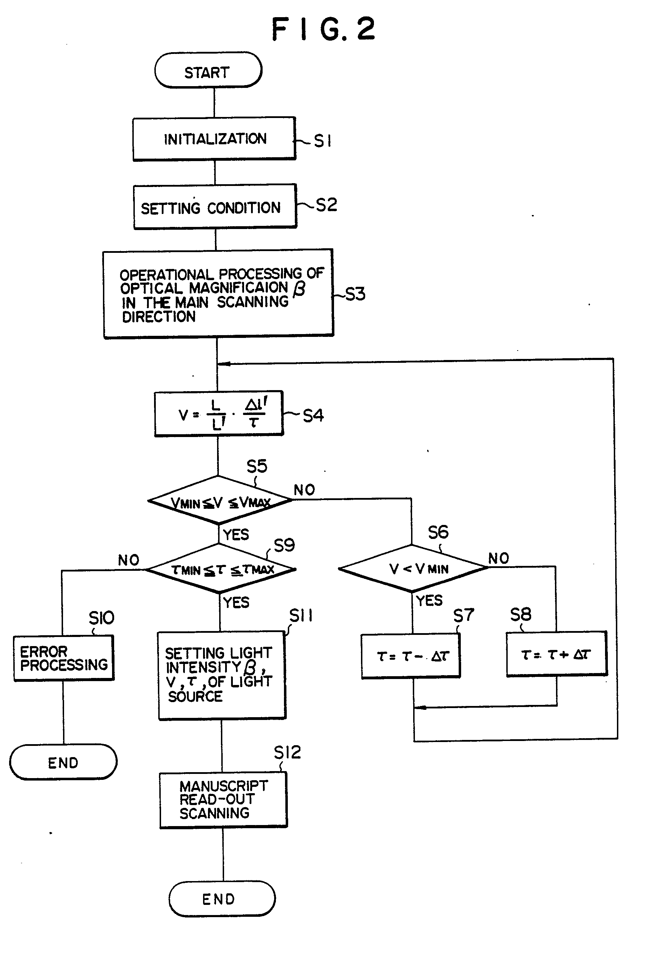

In Fig. 2 there is shown a flow chart for determining values of each of parameters to obtain the widest range of magnification variation in the sub-scanning direction in which feeding speed $V$ and scanning time $\tau$ are taken as parameters having relation to magnification in the sub-scanning direction, and for the set-up of the upper and the lower limit values of each of the parameters.

Firstly, at step S1 in the flow chart each of variables is initialized. Then, the initial value of the parameter $\tau$ relating to the scanning time of the sensor 1 is preferable to be substantially the middle value between the upper limit value $\tau_{MAX}$ and the lower limit value $\tau_{MIN}$.

At step S2 size $L$ of the original picture, size $L'$ of the reproduced picture and size $\Delta l'$ of one picture element of the reproduced picture are set up as conditions of reproduction. The setup conditions may be input in the CPU 12 shown in Fig. 1 by numerival value setting means 32, 33 and 34 such as digital switches etc., or also may be input as input data from a keyboard 35 etc.

At step S3 the optical magnification $\beta$ of a lens having relation to magnification in the main scanning direction is obtained by calculation. Then, if the optical magnification $\beta$ is out of the range of permissible values, and if increasing or trimming of picture elements is permissible, the optical magnification $\beta$ is varied to an optical magnification value within the permissible range, and picture elements are increased electrically or trimmed by the magnification converter 20 when the original picture, i.e., the manuscript is read out so that any desired sizes of reproduced pictures may be obtained.

At step S4 the feeding speed $V$ of magnification of the sub-scanning side can be obtained by applying the formula

$$V = L \cdot \Delta l / L' \cdot \tau \qquad (4)$$

by calculation from the size $L$ of the original picture, the size $L'$ of the reproduced picture, the size $\Delta l'$ of a picture element of the reproduced picture and the scanning time $\tau$ in the main scanning direction of the sensor 1.

At step S5 the feeding speed V obtained at step S4 is judged as to whether it is included within a range between the permissible uppermost value $V_{MAX}$ and the lowermost value $V_{MIN}$ or not, and if it is within this range, i.e., YES is obtained, then the flow advances to step S9 and if it is not included therein, to step S6.

At step S6 it is discriminated whether the feeding speed V is smaller than the lower limit value $V_{MIN}$ or not, and if it is smaller than the limit value $V_{MIN}$, i.e., $V<V_{MIN}$, then the flow advances to step S7. This is a case of the feeding speed V being too slow. Accordingly, in this case a smaller time $\Delta\tau$ is subtracted from the main scanning time $\tau$ to shorten the main scanning time whereafter the flow returns to step S4 and the calculation is again carried out so as to speed up the feeding speed.

If in the step S6 $V>V_{MAX}$, the feeding speed is too high, so that the flow advances to step S8, where a smaller time $\Delta\tau$ is added to the main scanning time $\tau$ to lengthen the main scanning time whereafter the flow returns to step S4 where calculation is again made to reduce the feeding speed. The feeding speed V which has been re-calculated at step S4 after the main scanning time $\tau$ having been varied is again judged at step S5 as to whether or not the feeding speed V is within the upper limit value $V_{MAX}$ and the lower limit value $V_{MIN}$.

As described the above, until the feeding speed (V) comes to be within the permissible range, that is, between the upper limit value $V_{MAX}$ and the lower limit value $V_{MIN}$, the main scanning time $\tau$ is varied repeatedly to obtain a suitable feeding speed V.

As there are cases where the main scanning time $\tau$ has been varied at step S7 or S8, the main scanning time $\tau$ is judged at step S9 as to whether or not it is included between the upper limit value $\tau_{MAX}$ and the lower limit value $\tau_{MIN}$. If it is within the permissble range, the flow advances to step S11, but if not, then it advances to step S10. At step S10, because of the main scanning time $\tau$ being out of the permissible range, it can not be set up, so that an error representation is given to an operator to make him change the conditions of reproducing the picture. Thus, the whole processings are finished.

However, in a case of expanding slightly the variable magnification range in the sub-scanning direction, without conducting the error-processing at step S10, it may be also possible to expand the variable magnification range by varying magnification of the picture element in the sub-scanning electrically by trimming or increasing of the picture elements by means of the magnification converter 20, and further the set-up is made by re-calculating the feeding speed V so that the speed V and the main scnaning time $\tau$ may be included in the permissible range.

The magnification variation described above relates to a case in which the electric charge storage time $\tau$ is fixed or changed stepwisely, while in the case of the magnification being varied by fixing the scanning speed V in the sub-scanning direction or changing it stepwisely and the electric charge storage time $\tau$ continuously, this may be satisfied by replacing V by $\tau$ at those steps S4, S5, S6, S7, S8 and S9. At step S11, each of the parameters such as the optical magnification $\beta$, the feeding speed V and the scanning time $\tau$ is set up to the optical magnification control means 11, the sub-scanning speed control means 15 and the main scanning speed control means 16, respectively, so that setting positions of the lens and the sensor and setting of the feeding speeds of the main and the sub-scanning directions, and controlling of the feeding speed in the sub-scanning direction may be performed. Further, the optical magnification $\beta$ and the main scanning time $\tau$ are set to the light quantity setting means 18, and the light quantity of the light source is set up to an amount so that an output level of the sensor may become the necessary amount, and in addition, since an output level of the cell is raised or lowered according to the light quantity and the main scanning time $\tau$, the cell sensitivity setting means 19 is adjusted so that, even if the magnification has been varied, signals of the same level may be obtained.

In a case where there is a necessity of varying the magnification electrically by trimming and/or increasing picture elements, the magnification variating conditions are set to the magnification converter 20, and when the original picture is being read, electrical varying of magnification is also performed.

The above descriptions regarding the original picture scanning apparatus A relates to the monochrome case. However, of course, it is also possible to apply the present invention to matters disclosed in the Japanese Patent Application Nos. 59-81901 (No. 81901/1984) and 59-102614 (No. 102614/1984) filed by the very Applicant to obtain a colored reproduced picture.

Nextly, the variation range of magnification of the present invention is explained hereinafter.

Practical range of the electric charge storage time $\tau$ is between 0.1 ms and 10 ms, and the variable magnification range is set to be, as can be understood from the formula (5), from 1/10 to 10 times the size of the original picture. Nextly, the feeding speed V of the original picture is, as afore-mentioned, at the maximum 50 mm/s (10 kp/s . 5 μm/p=$10\times10^3\times5\times10^{-6}$ m/s), and the minimum thereof is 5 mm/s. (it takes 60 seconds for sub-scanning an original picture of 30 cm length). Accordingly, in the case of $\tau=1$ ms, the range of variation of the magnification according to the moving speed V becomes from 1 to 10 times from the formula (5). Further, if the electric charge storage time $\tau$ is changed within the afore-mentioned range, the range of variation of the magnification according to the present invention becomes from 1/10 to 100 times of the original picture. Of course, if increasing and/or trimming is applied, the variable range can be further expanded.

As minutely described heretofore, according to the present invention, by varying both the feeding speed in the sub-scanning direction and the main scanning time, within the limit values of respective factors which restrict reproduction magnification in a picture image reproduction means, the range of variation of the magnification can be expanded and width of variation of magnification can be minutely regulated.

Further, if an electrically varying magnification by conventionally known trimming and/or increasing of picture elements is used together with the afore-mentioned, the range of variation can be highly expanded which results in widening utilization.

## Claims

1. A method for controlling magnification variation comprising the steps of projecting a picture image of an original (51) on a light receiving surface of a line sensor (57) by an optical means (58) providing an optical magnification, and moving said picture image projected on the light receiving surface of said line sensor in a second direction which intersects at right angles with a first direction in which said line sensor (57) is aligned by a feeding means (13, 14), said moving of said picture image in said second direction being controlled as a function of said optical magnification provided by said optical means (58), characterized by controlling a moving speed (V) provided by said feeding means (13, 14) in said second direction and an electric charge storage time ($\tau$) of said line sensor (57) so that a reproduced picture image of a desired magnification variation may be obtained.

2. A method according to claim 1, wherein a substantially middle value between the minimum and the maximum limit values of a permissible range for said electric charge storage time ($\tau$) of said line sensor (57) is preferentially set up and the magnification (V) being set up by varying the moving speed (V), and wherein, when the moving speed (V) exceeds an upper limit value thereof, the electric charge storage time ($\tau$) is varied so that the moving speed (V) may be within its permissible range.

3. A method according to claim 1, wherein said moving speed (V) is previously set up and the magnification being set up by varying the electric charge storage time ($\tau$), and wherein, when the electric charge storage time ($\tau$) exceeds an upper or lower limit value thereof, the feeding speed (V) is varied so that the storage time ($\tau$) may be within its permissible range.

4. A method according to any one of claims 1 to 3, wherein, when magnification in said second direction exceeds either of an upper or a lower limit value, the magnification is varied by increasing or trimming picture information represented by a scanning line extending in said first direction in said second direction.

5. A method according to any one of claims 1 to 4, wherein a light quantity setup conditions the diaphragm of a lens (2) and/or the light intensity of a light source (17) according to an optical magnification value ($\beta$) decided by the size of the original picture and that of a desired reproduced picture image and the value of the electric charge storage time ($\tau$) of the line sensor.

## Patentansprüche

1. Verfahren zur Steuerung einer Vergrößerungsänderung mit den Verfahrensschritten des Projizierens einer Abbildung einer Vorlage (51) auf eine Lichtempfängerfläche eines Zeilensensors (57) durch eine optische Vergrößerung liefernde optische Mittel (58), und des Bewegens der auf die Lichtempfängerfläche des Zeilensensors projizierten Abbildung in einer zweiten Richtung, welche im rechten Winkel zu einer ersten Richtung, in welcher der Zeilensensor (57) ausgerichtet ist, liegt, durch Vorschubmittel (13, 14), wobei das Bewegen der Abbildung in der zweiten Richtung als Funktion der durch die optischen Mittel (58) gelieferten optischen Vergrößerung gesteuert wird, gekennzeichnet durch Steuerung einer durch die Vorschubmittel (13, 14) gelieferten Bewegungsgeschwindigkeit (V) in der zweiten Richtung und einer elektrischen Ladungsspeicherzeit ($\tau$) des Zeilensensors (57) so, daß eine reproduzierte Abbildung gewünschter Vergrößerungsänderung gewonnen werden kann.

2. Verfahren nach Anspruch 1, bei welchem ein im wesentlichen mittlerer Wert zwischen dem minimalen und maximalen Grenzwert eines zulässigen Bereichs für die elektrische Ladungsspeicherzeit ($\tau$) des Zeilensensors (57) mit Präferenz eingestellt wird und die Vergrößerung (M) durch Veränderung der Bewegungsgeschwindigkeit (V) eingestellt wird, und bei welchem, wenn die Bewegungsgeschwindigkeit (V) einen oberen Grenzwert derselben überschreitet, die elektrische Ladungsspeicherzeit ($\tau$) so verändert wird, daß die Bewegungsgeschwindigkeit (V) innerhalb ihres zulässigen Bereichs liegen kann.

3. Verfahren nach Anspruch 1, bei welchem die Bewegungsgeschwindigkeit (V) vorhergehend eingestellt wird und die Vergrößerung eingestellt wird, indem die elektrische Ladungsspeicherzeit ($\tau$) verändert wird, und bei welchem, wenn die elektrische Ladungsspeicherzeit ($\tau$) einen oberen oder unteren Grenzwert derselben überschreitet, die Vorschubgeschwindigkeit (V) so verändert wird, daß die Ladungsspeicherzeit ($\tau$) innerhalb ihres zulässigen Bereichs liegen kann.

4. Verfahren nach irgendeinem der Ansprüche 1 bis 3, bei welchem, wenn die Vergrößerung in der zweiten Richtung einen oberen oder unteren Grenzwert überschreitet, die Vergrößerung durch Steigerung oder Beschneidung von Bildinformation, die durch eine Abtastzeile, die sich in der ersten Richtung erstreckt, dargestellt wird, in der zweiten Richtung verändert wird.

5. Verfahren nach irgendeinem der Ansprüche 1 bis 4, bei welchem eine Lichtmengeneinstellung die Blende einer Linse (2) und/oder die Lichtintensität einer Lichtquelle (17) entsprechend einem optischen Vergrößerungswert ($\beta$), der durch die Größe der Bildvorlage und diejenige eines gewünschten

# EP 0 173 099 B1

Reproduktionsbildes und den Wert der elektrischen Ladungsspeicherzeit ($\tau$) des Zeilensensors bestimmt wird, bestimmt.

**Revendications**

1. Procédé pour commander une variation d'échelle de reproduction, comportant les étapes de projection d'une image d'un document original (51) sur une surface de réception de lumière d'un capteur de ligne (57) par des moyens optiques (58) créant une échelle de reproduction optique, et de déplacement, par des moyens d'alimentation (13, 14), de ladite image de document projetée sur la surface de réception de lumière dudit capteur de ligne dans une seconde direction coupant à angle droit une première direction suivant laquelle ledit capteur de ligne (57) est aligné, ledit déplacement de ladite image de document dans ladite seconde direction étant commandé en fonction de ladite échelle de reproduction optique créée par lesdits moyens optiques (58), caractérisé en ce qu'on commande la vitesse de déplacement (V) appliquée par lesdits moyens d'alimentation (13, 14) dans ladite seconde direction ainsi que le temps ($\tau$) d'accumulation de charge électrique dudit capteur de ligne (57), de sorte qu'on puisse obtenir une image de document reproduite avec une variation désirée de l'échelle de reproduction.

2. Procédé selon la revendication 1, dans lequel on règle de préférence une valeur sensiblement moyenne entre les valeurs limites minimale et maximale d'une gamme admissible pour ledit temps ($\tau$) d'accumulation de charge électrique dudit capteur de ligne (57), l'échelle de reproduction (M) étant réglée en faisant varier la vitesse de déplacement (V), et dans lequel, quand la vitesse de déplacement (V) dépasse une valeur limite supérieure, on fait varier le temps ($\tau$) d'accumulation de charge électrique de manière que la vitesse de déplacement (V) puisse être comprise dans sa gamme admissible.

3. Procédé selon la revendication 1, dans lequel on régle au préalable ladite vitesse de déplacement (V), l'échelle de reproduction étant réglée en faisant varier le temps ($\tau$) d'accumulation de charge électrique et dans lequel, quant le temps ($\tau$) d'accumulation de charge électrique dépasse une valeur limite supérieure ou inférieure, on fait varier la vitesse d'alimentation (V) de manière que le temps d'accumulation ($\tau$) puisse être compris dans sa gamme admissible.

4. Procédé selon l'une quelconque des revendications 1 à 3, dans lequel quand l'échelle de reproduction dans ladite seconde direction dépasse une valeur limite supérieure ou inférieure, on fait varier l'échelle de reproduction en accroissant ou en réduisant dans ladite seconde direction les informations de document représentées par une ligne de balayage s'étendant dans ladite première direction.

5. Procédé selon l'une quelconque des revendications 1 à 4, dans lequel un réglage de quantité de lumière détermine le diaphragme d'un objectif (2) et/ou l'intensité lumineuse d'une source lumineuse (17) en accord avec une valeur d'échelle de reproduction optique ($\beta$) déterminée par la dimension du document original et par celle d'une image désirée du document reproduit ainsi que par la valeur du temps ($\tau$) d'accumulation de charge électrique du capteur de ligne.

8

FIG.1

CELL SENSITVITY SETTING MEANS — 19

MAGNIFICATION CONVERTER

20

MEMORY MEANS

21

EXPOSING LIGHT CONTROL MEANS — 23

PICTURE IMAGE SIGNAL PROCESSING MEANS

22

SCANNING SPEED CONTROL MEANS

30

SCANNING LINE PITCH SETTING MEANS ($\Delta l'$)

29

OPTICAL MAGNIFICATION CONTROL MEANS

SUB-SCANNING FEEDING SPEED CONTROL MEANS

MAIN-SCANNING SPEED CONTROL MEANS

LIGHT INTENSITY SETTING CONTROL MEANS

11    ($\beta$)    15    (V)    16    ($\tau$)    18

C P U

INPUT INSTRUCTION

35

12

L — 32    L' — 33    $\Delta l'$ — 34

A    B

5    1    3    6    2    26    25    31

7    4    13    14    24    27    28

9    10

8    17

EP 0 173 099 B1

# F I G. 2

```
                    ┌─────────────┐
                    │    START    │
                    └──────┬──────┘
                           │
                  ┌────────────────┐
                  │ INITIALIZATION │──── S1
                  └────────┬───────┘
                           │
                  ┌────────────────┐
                  │ SETTING CONDITION │──── S2
                  └────────┬───────┘
                           │
              ┌──────────────────────────┐
              │ OPERATIONAL PROCESSING OF │
              │ OPTICAL MAGNIFICAION β    │──── S3
              │ IN THE MAIN SCANNING      │
              │ DIRECTION                 │
              └────────────┬─────────────┘
```

$$V = \frac{L}{L'} \cdot \frac{\Delta l'}{\tau}$$ ──── S4

S5

$V_{MIN} \leqq V \leqq V_{MAX}$  NO

YES    S9

$\tau_{MIN} \leqq \tau \leqq \tau_{MAX}$   NO

YES

S6

$V < V_{MIN}$   NO

YES   S7        S8

$\tau = \tau - \Delta\tau$        $\tau = \tau + \Delta\tau$

S10

**ERROR PROCESSING**

**END**

S11

**SETTING LIGHT INTENSITY β, V, τ, OF LIGHT SOURCE**

S12

**MANUSCRIPT READ-OUT SCANNING**

**END**

# F I G. 3(a)

# F I G. 3(b)